# EUROPÄISCHE PATENTSCHRIFT

(11) **EP 1 959 152 B1**
(45) Veröffentlichungstag und Bekanntmachung des Hinweises auf die Patenterteilung: **16.11.2016**
(21) Anmeldenummer: 08002097.7
(22) Anmeldetag: 05.02.2008
(51) Int. Cl.: F16D 69/02

(54) **Reibbelag**
Friction covering
Garniture de friction

(30) Priorität: 09.02.2007 AT 2112007
(43) Veröffentlichungstag der Anmeldung: 20.08.2008
(73) Patentinhaber: Miba Frictec GmbH, 4663 Laakirchen (AT)
(72) Erfinder: Föge, Volker Dipl.-Ing., 4820 Bad Ischl (AT); Tsioptsias, Zisis, 4810 Gmunden (AT)
(74) Vertreter: Burger, Hannes

(56) Entgegenhaltungen:
- EP-A1- 0 386 652
- EP-A1- 0 961 038
- AT-B- 387 395
- CH-A- 542 274
- DE-A1- 2 832 609
- DE-U- 7 009 386
- DE-U1- 29 521 198
- US-A- 2 322 156
- US-A- 4 154 276
- US-A- 5 083 650

## Beschreibung

Die Erfindung betrifft einen Reibbauteil in Form eines Synchronisationsringes, einer Bremslamelle, einer Bremsbacke oder einer Kupplungsscheibe, mit einem metallischen Bauteilkörper, der eine Funktionsfläche zur Ausbildung eines Reibschlusses mit einem weiteren Reibbauteil aufweist, wobei die Funktionsfläche zumindest teilweise mit einem Reibbelag versehen ist, der eine Bindemittelmatrix aus einem synthetischen Harz und Reibpartikel umfasst, wobei die Bindemittelmatrix eine Schicht, die eine erste und eine dieser gegenüberliegende zweiten Oberflächen aufweist, mit einer vorbestimmbaren Schichtdicke ausgewählt aus einem Bereich mit einer unteren Grenze von 1 µm und einer oberen Grenze von 150 µm ausbildet, und ein Anteil der Reibpartikel, der ausgewählt ist aus einem Bereich mit einer unteren Grenze von 20 % und einer oberen Grenze von 100 %, bezogen auf den Gesamtanteil der Reibpartikel, einen Durchmesser aufweist, der größer ist als die Schichtdicke der Bindemittelmatrix, sowie eine Reibbaugruppe, umfassend zumindest einen ersten und einen zweiten damit in Reibschluss verbringbaren Reibbauteil, wobei sowohl der erste als auch der zweite Reibbauteil jeweils zumindest eine Funktionsfläche zur Ausbildung des Reibschlusses aufweisen, wobei zumindest eine der Funktionsflächen zumindest teilweise mit einem Reibbelag versehen ist.

Die Entwicklung der Automobilindustrie in Richtung immer leistungsfähigerer Motoren hat es erforderlich gemacht, dass auch die weiteren Komponenten eines Kraftfahrzeuges, wie z.B. das Kupplungssystem oder das Bremssystem, an die höheren Leistungen dieser Motoren angepasst werden. Darüber hinaus ist eine eindeutige Tendenz dahingehend zu beobachten, dass die Fahrzeuge ein immer geringes Gewicht aufweisen sollen, um damit Kraftstoff einzusparen. Es ist daher erforderlich, die Komponenten des Kraftfahrzeuges einfacher bzw. aus Werkstoffen mit geringerem Gewicht auszubilden.

Ein Hochleistungsreibmaterial ist beispielsweise aus der DE 698 31 821 T2 bekannt. Dieses besteht aus einem zweischichtigen Material auf Faserbasis, das eine sekundäre oder obere Schicht aufweist, die mit einer primären oder unteren Schicht haftend verbunden ist. Die Primärschicht weist nicht lineare elastische Fasern, Baumwollfasern und Füllmaterial auf, die sekundäre Schicht weist Aramidfasern, wahlweise synthetischen Graphit, wahlweise Füllmaterialien und wahlweise Verarbeitungshilfen auf. Weiters weist die sekundäre Schicht Baumwollfasern und poröse Kohlenstoffteilchen auf.

Aus der DE 602 10 953 T2 ist ein Reibmaterial bekannt, mit einer ersten Schicht, die ein faserförmiges Basismaterial aufweist, und einer zweiten Schicht, die mindestens einen Typ eines reibungsmodifizierenden Partikels auf einer Deckfläche des faserförmigen Basismaterials besitzt. Die zweite Schicht hat eine durchschnittliche Dicke von etwa 30 bis 200 µm. Die Deckschicht besitzt eine Permeabilität, die geringer ist, als die der ersten Schicht. Die reibungsmodifizierenden Partikel umfassen Siliziumdioxydpartikel mit einer durchschnittlichen Durchmessergrößer von etwa 0,1 bis etwa 80 µm und einer unregelmäßigen Form.

Daneben sind aber auch einschichtige Reibbeläge bekannt. Beispielsweise beschreibt die AT 387 395 ein Verfahren zum Beschichten eines Stützträgers mit einem kunstharzgebundenen Reibbelag, der über eine Haftvermittlungsschicht mit dem Stützträger verbunden und durch Verpressen und Wärmeaushärten einer Reibpulvermischung, die ein durch Wärmezufuhr aushärtbares Kunstharz enthält, hergestellt wird. Dabei wird zunächst die Reibpulvermischung auf den Stützträger in einer bei der gewünschten Verdichtung der Enddicke des Reibbelages ergebende Schichtdicke aufgebracht und dann die aufgebrachte Reibpulverschicht auf eine Temperatur über dem Schmelzintervall des aushärtbaren Kunststoffharzes erwärmt und vor dem Erreichen eines die nachträgliche Verbesserung beeinträchtigenden Aushärtegrades auf die Enddicke des Reibbelages verpresst. Zur Haftvermittlung können die Stützträger an ihren zu beschichtenden Oberflächen mittels viskoser Klebeharze, z.B. Phenolharz, bestrichen werden. In diesem Anstrich kann unmittelbar ein Raupulver, das vorzugsweise aus dem Hauptbestandteil der Reibpulvermischung besteht, mit einer eng eingeschränkten Siebtraktion von z.B. 0,15 bis 0,20 mm eingestreut werden. Die Streumenge wird dabei so eingestellt, dass ca. 30 % bis 40 % der bestreuten Flächen mit dem Raupulver bedeckt werden. Vor dem vollständigen Aushärten der Klebeharzschicht kann dann die eigentliche Reibpulverschicht aufgestreut werden.

Die US 5,083,650 A beschreibt ein Reibelement, das in einem Getriebe verwendbar ist, umfassend ein hitzebeständiges Papier mit gleichmäßiger Dichte, eine erste Schicht eines wärmehärtbaren polymeren Bindemittels, das über einer Hauptoberfläche des Papiers aufgetragen ist und das diese Hauptoberfläche des Papiers wenigstens teilweise durchtränkt, körnige Kohlenstoff-Reibungsteilchen, die gleichmäßig auf der offenliegenden Oberfläche der ersten Schicht verteilt und teilweise in dieser eingebettet sind, und eine zweite Schicht des polymeren Bindemittels über der ersten Schicht und den teilweise eingebetteten körnigen Kohlenstoff-Reibungsteilchen, wobei die zweite Schicht die körnigen Kohlenstoff-Reibungsteilchen zwar überzieht, diese dabei jedoch nicht verdeckt.

Die DE 70 09 386 U beschreibt eine Bremsbacke aus Stahl für Sicherheitsbremsvorrichtungen bei angetriebenen bzw. gezogenen schienengebundenen zwangsgeführten Bergbaufördermitteln, insbesondere Hänge- und Standbahnen, wobei die gegen die Fahrschiene anpressbare Backen-Bremsfläche eine in einer aufgeschmolzenen Lotschicht befestigte Hartmetallbestückung aus unregelmäßig geformten kantigen Hartmetallkörnern aufweist. Die Hartmetallbestückung der Backe besteht aus in einer einzigen Lage über der Stahlgrundfläche angeordneten mehrkantigen Hartmetallkörnern der Korngröße von etwa 1,5 mm bis 3 mm und alle Körner sind in einer dünnen, auf die Backe aufgeschmolzenen Hartlotschicht jeweils nur teilweise eingebettet und dabei bodenseitig unmittelbar auf der Stahlgrundfläche der Backe aufgestützt.

Aus der US 2,322,156 A ist ein Reibeelement bekannt, umfassend einen flexiblen Träger, auf dem Reibpartikel mittels eines organischen synthetischen Harz verankert sind. Das Harz umfasst mehrere Schichten. In zumindest einer der Schichten ist ein nicht faserförmiger Füllstoff enthalten.

Die DE 28 32 609 A1 beschreibt ein Reibmaterial zur Kraftübertragung im Kraftschluss, umfassend eine elastische Bettung und eine mit dieser in Verbindung stehende Schicht harter Partikel, deren Form und Größe einen Eingriff derselben in die Mikrostruktur (Rauhigkeitsfeld) der Oberfläche des zu erfassenden Körpers gewährleisten.

Aus der CH 542 274 A ist ein Pedal für Fahrzeuge bekannt, bei dem ein Teil desselben mit einer Schicht aus erhärtetem Kunststoff versehen ist, welche vorstehende, harte und abrasive Antigleitpartikel enthält.

Die EP 0 386 652 A1 beschreibt ein Verfahren zum Herstellen einer Reiblamelle, die einen flachen metallischen Stützkörper mit einer Oberseite und einer Unterseite sowie je einen Reibbelag auf der Oberseite und der Unterseite aufweist, wobei die Reibbeläge vorzugsweise aus einer kunstharzgebundenen Reibpulvermischung bestehen. Das Verfahren umfasst die Verfahrensschritte: Transportieren von unbearbeiteten Stützkörpern zu einer Säuberungs- und Vorbereitungsanlage; Säubern und Vorbereiten der Oberseite und der Unterseite; Überführen der gesäuberten und vorbereiteten Stützkörper zu einem Beschichtungs- und Presswerkzeug; Versehen der Oberseite und der Unterseite mit jeweils einer dosierten Reibmaterialschicht aus losem Reibmaterial; gleichzeitiges Verdichten und Anpressen der Reibmaterialschichten an die Oberseite bzw. Unterseite; Überführen der beschichteten Stützkörper zu einer Heizeinrichtung; Aushärten der verdichteten Reibmaterialschichten bei einer vorbestimmten Temperatur für eine vorbestimmte Zeit; vorzugsweise Maßschleifen und Rillieren.

Aus der US 4,154,276 A ist ein Befestigungsmittel mit vergrößertem Kopf und länglichem Schaft bekannt, das einen Überzug aufweist, der einen Harzträger und schmirgelartige, darin eingelagerte Partikel umfasst, wobei die Partikel stationär im Träger gehalten werden, um die Reibung zwischen dem Kopf des Befestigungsmittels und einem verbundenen Werkstück zu vergrößern, wenn das Befestigungsmittel darin eingetrieben wird.

Die DE 295 21 198 U1 beschreibt ein Bauteil mit wenigstens einer zur Pressverbindung mit einer Gegenfläche eines Bauelementes vorgesehenen Anlagefläche, die als Raufläche ausgebildet ist, wobei die Raufläche durch auf der Anlagefläche angeordnete Hartstoffpartikel gebildet wird, die eine höhere Härte und Druckfestigkeit als zumindest die Gegenfläche des Bauelementes aufweisen. Die Hartstoffpartikel bilden einen festen Verbund mit der Anlagefläche.

Aus der EP 0 961 038 A1 ist ein Verbindungselement zur reibungserhöhenden spielfreien reversiblen Verbindung von zu fügenden Werkstücken bekannt, das dadurch gekennzeichnet ist, dass es aus einer dünnen federelastischen Folie mit einer Eigenfestigkeit, die mindestens ebenso hoch ist wie die Eigenfestigkeit der zu fügenden Werkstücke, besteht, wobei die federelastische Folie an ihrer Oberfläche Partikel definierter Größe trägt, und diese Partikel aus einem Material mit einer Druck- und Scherfestigkeit bestehen, welche jene der zu fügenden Werkstücke übertrifft.

Aufgabe vorliegender Erfindung ist es, einen Reibbauteil mit verbesserter Haftung des Reibbelages auf dem Trägerelement zur Verfügung zu stellen.

Diese Aufgabe wird durch den eingangs genannten Reibbauteil, bei dem die Reibpartikel über die erste und über die zweite Oberfläche vorragen, sowie durch die Reibbaugruppe, in der das erfindungsgemäße Reibbauteil angeordnet ist, gelöst. Es wird mit dem Reibbauteil eine höhere Sicherheit erreicht, dass die Reibpartikel über die Oberfläche der Bindemittelmatrix vorstehen und somit der Reibbelag eine hohe Reibwirkung aufweist. Da die Reibpartikel im Vergleich zur Schichtdicke der Bindemittelmatrix einen größeren Durchmesser aufweisen, stehen diese Reibpartikel auch tief in die Bindemittelmatrix hinein, sodass also keine zusätzlichen Verstärkungsmittel zur Verstärkung der Bindemittelmatrix erforderlich sind. Es ist also nicht erforderlich unterschiedliche Siebfraktionen an Reibpartikel in der Bindemittelmatrix anzuordnen, um diese Aufgaben, also die Verstärkung der Bindemittelmatrix und primär die Reibwirkung, zu erfüllen. Darüber hinaus hinterlassen aus der Bindemittelmatrix herausgerissene Reibpartikel ein entsprechendes Volumen, welches wiederum vorteilhaft im Hinblick auf nasslaufende Anwendungen ist, da damit bei Eintreten des Reibschlusses die jeweilige Flüssigkeit, beispielsweise Bremsflüssigkeit oder Öle, in dieses Volumen verdrängt und folglich eine entsprechend hohe Reibwirkung erzielt werden kann.

Die Reibpartikel stehen sowohl unterhalb als auch oberhalb der Schicht aus der Bindemittelmatrix über diese vor, also einerseits in Richtung auf den Träger des Reibbelages und andererseits in Richtung auf den weiteren Reibbauteil, der damit in Eingriff bzw. in Reibschluss verbracht wird. Es wird durch das Vorragen der Reibbaupartikel auch an der Unterseite dieses Reibbelages eine verbesserte Haftung auf dem Träger erreicht, insbesondere wenn der Reibbelag unter Druck auf dem Träger gebildet oder auf diesem aufgebracht wird. Diese Effekt basiert darauf, dass die Reibpartikel in die Gegenfläche des Trägers bei Aufbringen einer entsprechenden Anpresskraft eindringen, dabei kommt es zu einem Mikroformschluss zwischen dem Träger und den Reibpartikeln, der der Delamination des Reibbelages entgegenwirkt.

Besonders vorteilhaft ist diese Ausführungsvariante, wenn die Oberfläche des Trägers im Bereich des Reibbelages vorher aufgeraut, beispielsweise sandbestrahlt, wird bzw. wenn diese Oberfläche bereits eine gewisse Porosität aufweist, beispielsweise der Träger aus einem Sinterwerkstoff gebildet ist, da damit dieser "Verkrallungseffekt" verstärkt werden kann.

Die Reibpartikel können eine mittlere Größe aufweisen, die ausgewählt ist aus einem Bereich mit einer unteren Grenze von 2 µm und einer oberen Grenze von 200 µm. Es ist damit möglich unterschiedliche Schichtdicken des Reibbelages vorzusehen, wobei auch bei höheren Schichtdicken noch eine ausreichende Anzahl an Reibpartikel über die Bindemittelmatrix vorragt, um mit einem weiteren Bauteil in Eingriff zu gelangen. Ist die mittlere Größe kleiner als 2 µm, kann damit die Gefahr bestehen, dass die Bindemittelmatrix zu dünn wird, wodurch die Standzeit des Reibbelages zu stark verringert werden würde. Bei Partikelgrößen von über 200 µm wurde keine Verbesserung des Reibbelages beobachtet.

Es können im Rahmen der Erfindung also Reibpartikel mit einer mittleren Größe verwendet werden, die ausgewählt ist aus einem Bereich mit einer unteren Grenze von 20 µm und einer oberen Grenze von 150 µm, insbesondere einer unteren Grenze von 30 µm und einer oberen Grenze von 125 µm, vorzugsweise einer unteren Grenze von 40 µm und einer oberen Grenze von 75 µm. Beispielsweise können Reibpartikel mit einer mittleren Größe verwendet werden, die ausgewählt ist aus einem Bereich mit einer unteren Grenze von 10 µm und einer oberen Grenze von 60 µm.

Es sei an dieser Stelle darauf hingewiesen, dass unter mittlerer Größe das arithmetische Mittel verstanden wird, sodass es also im Rahmen der Erfindung durchaus möglich ist, dass einzelne Reib- bzw. Hartpartikel auch eine Korngröße aufweisen, die unterhalb bzw. oberhalb den angegebenen Grenzen liegt. Die überwiegende Mehrzahl der Partikel liegt in ihrer Korngröße jedoch in den angegebenen Korngrößenbereichen.

Die Bindemittelmatrix selbst weist eine Schichtdicke auf, ausgewählt aus einem Bereich mit einer unteren Grenze von 1 µm und einer oberen Grenze von 150 µm. Es ist auf diese Weise möglich, das Verhalten des Reibbelages entsprechend zu variieren, sodass also unterschiedlich hohe Kräfte übertragen werden können. Beispielsweise ist es auch auf diese Weise möglich, einer Bruchgefahr des Reibbauteils, auf dem der Reibbelag angeordnet ist, vorzubeugen, indem die Schichtdicke des Reibbelages so gewählt wird, dass ab einer gewissen Maximalkraft bzw. ab einem gewissen maximalen Moment zuerst die Reibbelagschicht bricht.

Vorteilhafte Weiterbildungen sehen vor, dass die Schichtdicke der Bindemittelmatrix ausgewählt ist aus einem Bereich mit einer unteren Grenze von 5 µm und einer oberen Grenze von 100 µm bzw. einer unteren Grenze von 50 µm und einer oberen Grenze von 75 µm. Vorzugsweise weist die Bindemittelmatrix eine Schichtdicke auf, die ausgewählt ist aus einem Bereich mit einer unteren Grenze von 10 µm und einer oberen Grenze von 20 µm, es können also bei im Vergleich zu Reibbelägen aus dem Stand der Technik zumindest annähernd gleich bleibenden Eigenschaften bei sehr dünnen Reibbelägen zur Verfügung gestellt werden, wodurch die Kompaktheit des Reibbauteils bzw. der Reibbaugruppe erhöht und damit entsprechende Vorteil im Hinblick auf den Fahrzeugbau generiert werden können.

Der Anteil der Bindemittelmatrix am Reibbelag kann ausgewählt sein aus einem Bereich mit einer unteren Grenze von 5 Gew.-% und einer oberen Grenze von 80 Gew.-%. Unterhalb von 5 Gew.-% hat sich gezeigt, dass der Zusammenhalt innerhalb der Reibbelagsschicht verringert ist, wodurch Reibpartikel verloren gehen und somit die Wirksamkeit des Reibbelages verringert wird. Oberhalb von 80 Gew.-% hat eine weitere Steigerung des Bindemittelanteils am Reibbelag keine weitere Verbesserung des Reibbelages in durchgeführten Versuchen gezeigt. Vielmehr ist anzunehmen, dass aufgrund des verringerten Anteils an Reibpartikeln im und/oder am Reibbelag die Eigenschaften desselben wiederum verschlechtert werden.

Der Bindemittelanteil kann beispielsweise ausgewählt sein aus einem Bereich mit einer unteren Grenze von 15 Gew.-% und einer oberen Grenze von 60 Gew.-% bzw. aus einem Bereich von einer unteren Grenze von 20 Gew.-% und einer oberen Grenze von 40 Gew.-%. Beispielsweise kann der Bindemittelanteil ausgewählt sein aus einem Bereich mit einer unteren Grenze von 20 Gew.-% und einer oberen Grenze von 55 Gew.-%.

In einer bevorzugten Ausführungsvariante hierzu erstreckt sich zumindest ein Anteil der Reibpartikel durch die gesamte Schichtdicke der Bindemittelmatrix, sodass als ein und dasselbe Reibpartikel sowohl über die erste äußere als auch über die zweite innere Oberfläche des Reibbelages vorragt. Es wird damit ein direkter Kontakt der für den Reibschluss verantwortlichen Reibpartikel mit dem metallischen Träger des Reibbauteils ermöglicht, wodurch eine verbesserte Wärmeabfuhr der bei der Reibung entstehenden Wärme auch bei trocken laufenden Reibbaugruppen ermöglicht wird.

Von Vorteil ist dabei, wenn dieser Anteil der sich über die gesamte Schichtdicke der Bindemittelmatrix erstreckenden Reibpartikel ausgewählt ist aus einem Bereich mit einer unteren Grenze von 20 % und einer oberen Grenze von 80 %, bezogen auf den gesamten Anteil der Reibpartikel. Insbesondere ist dieser Anteil ausgewählt aus einem Bereich mit einer unteren Grenze von 30 % und einer oberen Grenze von 70 %, vorzugsweise aus einem Bereich von einer unteren Grenze von 40 % und einer oberen Grenze von 50 %.

Erreicht wird dies damit, dass vor dem Aushärten des Bindemittels ein Druck auf den Reibbelag ausgeübt wird, sodass also die Reibpartikel durch die noch weiche Bindemittelmatrix hindurchgedrückt werden.

Es ist dabei von Vorteil, wenn Reibpartikel ausgewählt werden, die eine Wärmeleitfähigkeit λ bei 20 °C von mindestens 40 W/mK, insbesondere mindestens 70 W/mK, vorzugsweise mindestens 100 W/mK, aufweisen. Es ist weiters von Vorteil, wenn die Wärmeleitfähigkeit λ bei 1000 °C mindestens 21 W/mK beträgt.

Die Flächenbelegung der Reibpartikel an der äußeren Oberfläche des Reibbelages kann ausgewählt sein aus einem Bereich mit einer unteren Grenze von 3 Flächen-% und einer oberen Grenze von 45 Flächen-%. Als äußere Oberfläche des Reibbelages wird dabei jene Oberfläche verstanden, welche in Reibschluss mit einem weiteren Bauteil einer Reibbaugruppe verbringbar ist. Wiederum konnte dabei beobachtet werden, dass Flächenbelegungen unter 3 Flächen-% eine Verringerung der Reibwirkung nach sich zieht, wohingegen bei einer Flächenbelegung von über 45 Flächen-% keine nennenswerte weiterer Steigerung der Reibwirkung beobachtbar ist.

Die Flächenbelegung kann beispielsweise ausgewählt sein aus einem Bereich mit einer unteren Grenze von 8 Flächen-% und einer oberen Grenze von 35 Flächen-%, insbesondere mit einer unteren Grenze von 15 Flächen-% und einer oberen Grenze von 25 Flächen-%.

Zur Verbesserung der Eigenschaften des Reibbelages kann dieser zumindest einen weiteren Zusatzstoff in einem Anteil enthalten, der ausgewählt ist aus einem Bereich mit einer unteren Grenze von 0,5 Gew.-% und einer oberen Grenze von 10 Gew.-%.

Dieser Zusatzstoff kann ausgewählt sein aus einer Gruppe umfassend Pigmente, wie z.B. Ruß, Eisenoxide oder Titandioxyd, weiters Füllstoffe, wie z.B. Kieselsäure, Talkum, Silikate, weiters Korrosionsinhibitoren, wie z.B. Phosphate, beispielsweise Zinkphosphat, weiters rheologiebeeinflussende Mittel, wie z.B. hochdisperse Kieselsäure, Schichtsilikate oder polymere Harnstoffverbindungen sowie weiters Fasern, beispielsweise Metallfasern oder synthetische Fasern, um gegebenenfalls die Matrixfestigkeit zu steigern.

Füllstoffe dienen unter anderem der Kostenminimierung des Reibbelages bzw. können diese auch andere Eigenschaften des Reibbelages selbst verändern.

Im Hinblick auf Korrosionsinhibitoren sei angemerkt, dass damit korrosiven Angriffen in der Reibbelagschicht bzw. der darunter liegenden Metalloberfläche vorgebeugt werden kann.

Mit rheologiebeeinflussenden Mitteln kann die Verarbeitbarkeit des Reibbelages, d.h. des Bindemittelharzes bzw. Bindemittellackes, verbessert werden.

Es sei an dieser Stelle erwähnt, dass es im Rahmen der Erfindung möglich ist, weitere Zusatzstoffe bzw. Kombinationen aus einzelnen Zusatzstoffen im Reibbelag vorzusehen, wobei diese weiteren Zusatzstoffe aus der lackverarbeitenden Industrie bekannt sind, sodass sich eine weitere Erörterung an dieser Stelle erübrigt.

Bevorzugt ist ein Summenanteil an mehreren unterschiedlichen Zusatzstoffen im Reibbelag nicht größer als 25 Gew.-%, da darüber hinausgehende Anteile unter Umständen verschlechternd im Hinblick auf die Eigenschaften des Reibbelages wirken. Der Anteil ist dabei bezogen auf den gesamten Reibbelag, also Bindemittel mit Reibpartikel und Zusatzstoffen.

Obwohl faserartige Zusatzstoffe, wie bereits erwähnt, möglich sind, ist es gemäß einer bevorzugten Ausführungsvariante vorgesehen, dass der Reibbelag faserfrei ist. Es ist damit ein onkologisch verbesserter Reibbelag herstellbar.

Die Reibpartikel können im Rahmen der Erfindung jeden möglichen Habitus aufweisen, es ist jedoch bevorzugt, dass diese Reibpartikel einen kugel- oder knollenförmig bzw. annähernd kubischen Habitus mit polygonalem Querschnitt aufweisen. Insbesondere ist es von Vorteil, wenn diese Reibpartikel ausgeprägte Spitzen aufweisen, da damit die Reibwirkung verbessert werden kann.

Besondere Eigenschaften des Reibbelages bzw. Reiblackes, insbesondere im Hinblick auf die Erhöhung des Reibungskoeffizienten, die verringerte Geräuschbildung, die Temperaturbeständigkeit, sowie die Wärmeleitfähigkeit, konnte beim Reibbelag beobachtet werden, wenn das Bindemittel durch ein, gegebenenfalls modifiziertes, Phenolharz und die Reibpartikel durch Siliziumcarbid gebildet sind. Durch dieses Bindemittel kann die Festigkeit des Reibbelages auf dem Träger, also dem Reibbauteil verbessert werden. Es können auch modifizierte Phenolharze verwendet werden, beispielsweise Phenolharze, die mit Silikonharzen vermischt sind.

Es sei jedoch darauf hingewiesen, dass es im Rahmen der Erfindung auch möglich ist, andere Bindemittel für die Bindemittelmatrix des Reibbelages bzw. Reiblackes zu verwenden. Diese Bindemittel können z.B. ausgewählt sein aus einer Gruppe umfassend Polyvinylfluorid, Polyvinylidenfluorid, Polyesterimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten, Acrylharze, Epoxyharze, Epoxyharzester, Polyamid 6, Polyamid 66, Polyoxymethylen, Polyarylether, Polyarylketone, Polyaryletherketone, Polyarylether-etherketone, Polyetheretherketone, Polyetherketone, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide oder Copolymere davon.

Im Rahmen der Erfindung ist es auch möglich, Mischungen aus zumindest zwei dieser Bindemittel im Reibbelag zu verwenden, wie z.B. Polyvinylfluorid und/oder Polyvinylidenfluorid und/oder Polyesterimide und/oder Polyimidharze, wie z.B. Carboranimide, und/oder aromatische Polyimidharze und/oder wasserstofffreie Polyimidharze und/oder Poly-triazo-Pyromellithimide und/oder Polyamidimide, insbesondere aromatische, und/oder Polyaryletherimide, gegebenenfalls modifiziert mit Isocyanaten, und/oder Polyetherimide, gegebenenfalls modifiziert mit Isocyanaten, und/oder Acrylharze und/oder Epoxyharze und/oder Epoxyharzester und/oder Phenolharze und/oder Polyamid 6 und/oder Polyamid 66 und/oder Polyoxymethylen und/oder Polyarylether und/oder Polyarylketone und/oder Polyaryletherketone und/ oder Polyarylether-etherketone und/oder Polyetheretherketone und/oder Polyetherketone und/ oder Polyethylensulfide und/oder Allylensulfid und/oder Poly-triazo-Pyromellithimide und/ oder Polyesterimide und/oder Polyarylsulfide und/oder Polyvinylensulfide und/oder Polyphenylensulfide und/oder Polysulfone und/oder Polyethersulfone und/oder Polyarylsulfone und/oder Polyaryloxide und/oder Polyarylsulfide mit Polyvinylfluorid und/oder Polyvinylidenfluorid und/oder Polyesterimiden und/oder Polyimidharzen, wie z.B. Carboranimiden, und/oder aromatischen Polyimidharzen und/oder wasserstofffreien Polyimidharzen und/oder Poly-triazo-Pyromellithimiden und/oder Polyamidimiden, insbesondere aromatische, und/ oder Polyaryletherimiden, gegebenenfalls modifiziert mit Isocyanaten, und/oder Polyetherimiden, gegebenenfalls modifiziert mit Isocyanaten, und/oder Acrylharzen und/oder Epoxyharzen und/oder Epoxyharzestern und/oder Phenolharzen und/oder Polyamid 6 und/oder Polyamid 66 und/oder Polyoxymethylen und/oder Polyarylethern und/oder Polyarylketonen und/oder Polyaryletherketonen und/oder Polyarylether-etherketonen und/oder Polyetheretherketonen und/oder Polyetherketonen und/oder Polyethylensulfiden und/oder Allylensulfid und/oder Poly-triazo-Pyromellithimiden und/oder Polyesterimiden und/oder Polyarylsulfiden und/oder Polyvinylensulfiden und/oder Polyphenylensulfiden und/oder Polysulfonen und/oder Polyethersulfonen und/oder Polyarylsulfonen und/oder Polyaryloxiden und/oder Polyarylsulfiden zu mischen.

Als Reib- bzw. Hartpartikel können auch Partikel verwendet werden, die ausgewählt sind aus einer Gruppe umfassend Metalloxide, wie z.B. CrO₃, Fe₃O₄, ZnO, CdO, Al₂O₃ (Korund), MnO, Nitride, wie z.B. Si₃N₄, AlN, kubisches BN, weiters SiO₂, spheroidaler Kohlenstoff, Diamant, Carbide, wie z.B. CaC₂, Mo₂C, WC, B₄C, Metallpartikel, wie z.B. Zn, Ba, Cd, Co, Cu, Stahl, weiters Phosphide, wie z.B. Fe₃P, Metallboride, wie z.B. Fe₂B, Ni₂B, FeB, Silizide, Thiophosphate, wie z.B. Zinkthiophosphat, sowie Glas.

Ebenso sind auch hier Kombinationen verschiedener Reib- bzw. Hartpartikel möglich, wie z.B. von CrO₃ und/oder Fe₃O₄ und/oder ZnO und/oder CdO und/oder Al₂O₃ (Korund) und/ oder MnO und/oder Si₃N₄ und/oder AlN und/oder kubisches BN und/oder SiO₂ und/oder spheroidaler Kohlenstoff und/oder Diamant und/oder SiC und/oder CaC₂ und/oder Mo₂C und/oder WC und/oder B₄C und/oder Zn und/oder Ba und/oder Cd und/oder Co und/oder Cu und/oder Stahl und/oder Fe₃Pund/oder Fe₂B und/oder Ni₂B und/oder FeB und/oder Silizide und/oder Thiophosphaten, wie z.B. Zinkthiophosphat, und/oder Glas mit CrO₃ und/oder Fe₃O₄ und/oder ZnO und/oder CdO und/oder Al₂O₃ (Korund) und/oder MnO und/oder Si₃N₄ und/oder AlN und/oder kubisches BN und/oder SiO₂ und/oder spheroidaler Kohlenstoff und/ oder Diamant und/oder SiC und/oder CaC₂ und/oder Mo₂C und/oder WC und/oder B₄C und/ oder Zn und/oder Ba und/oder Cd und/oder Co und/oder Cu und/oder Stahl und/oder Phosphide wie z.B. Fe₃P und/oder Fe₂B und/oder Ni₂B und/oder FeB und/oder Silizide und/oder Thiophosphaten, wie z.B. Zinkthiophosphat, und/oder Glas.

Besonders bevorzugt ist die Reibbaugruppe als Differenzielsperre, trocken- oder nasslaufende Kupplung, trocken- oder nasslaufende Bremse, Lamellenbremse, Haltebremse, Sicherheitsbremse oder als hydrostatischer Antrieb ausgebildet.

Weiters trifft die Erfindung die Verwendung der Reibbaugruppe in Anwendungen mit dynamischer Reibung.

Unter dynamischer Reibung ist dabei jene Reibung zu verstehen, die zwischen zwei relativ zueinander bewegten Körpern entsteht. Sie ist von der statischen Reibung zu unterscheiden.

Zum besseren Verständnis der Erfindung wird diese anhand der folgenden Ausführungen näher erläutert.

Es zeigen jeweils in stark schematisch vereinfachter Darstellung:
- Fig. 1: einen Ausschnitt aus einem Reibbauteil mit einem bereichsweise darauf angeordneten Reibbelag;
- Fig. 2: einen Querschnitt durch einen Reibbelag mit darin eingebetteten Reibpartikeln, der nicht unter den Wortlaut der Ansprüche fällt;
- Fig. 3: einen Querschnitt durch eine Ausführungsvariante des Reibbelages nach Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

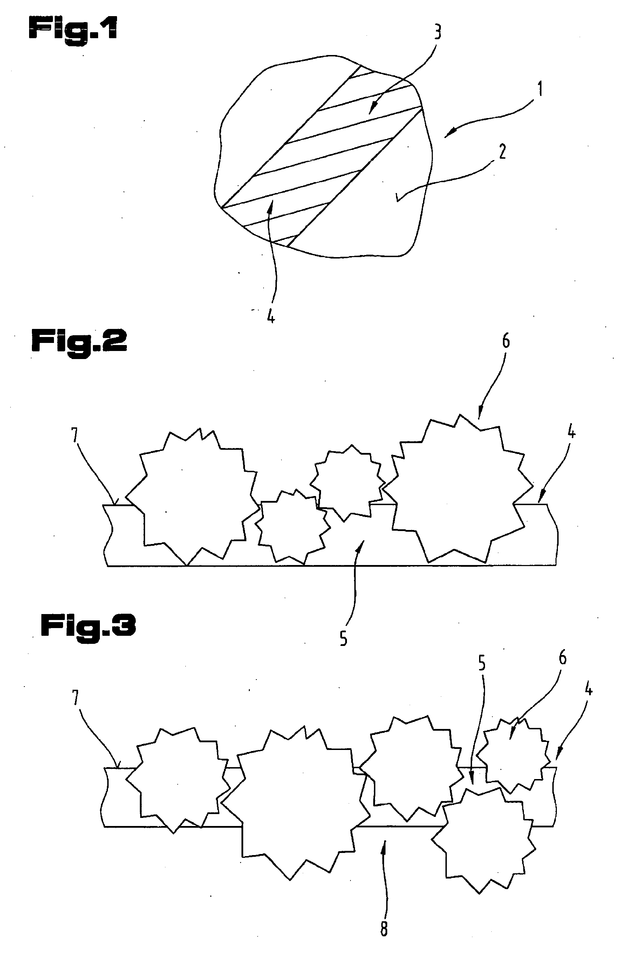

Fig. 1 zeigt einen Reibbauteil 1 mit einer ersten Oberfläche 2. An dieser Oberfläche 2 ist eine Funktionsfläche 3 ausgebildet, die für die reibschlüssige Anlage an einen zweiten, nicht dargestellten Reibbauteil ausgebildet ist. Diese Funktionsfläche ist mit einem Reibbelag 4 bzw. Reiblack versehen.

Dieser Reibbelag 4 ist in Fig. 2 besser dargestellt. Er umfasst eine Bindemittelmatrix 5, in der Reibpartikel 6 so eingebettet sind, dass sie über eine Bindemittelmatrixoberfläche 7 vorragen.

Die Reibpartikel 6 weisen bevorzugt eine Härte nach Mohs auf, die ausgewählt ist aus einem Bereich mit einer unteren Grenze von 8 und einer oberen Grenze von 10.

Es sei erwähnt, dass es im Rahmen der Erfindung nicht zwingend erforderlich ist, dass sämtliche Reibpartikel 6 über die Bindemittelmatrixoberfläche 7 vorragen. Vielmehr kann ein Anteil der Reibpartikel 6 vollständig in der Bindemittelmatrix 5 eingebettet sein. Damit wird erreicht, dass bei Verlust einzelner Reibpartikel 6 und Abrieb der Bindemittelmatrix 5 diese vollständig eingebetteten Reibpartikel 6 frei gelegt werden können, wodurch dem Reibbelag 4 ein "Notlaufverhalten" gegeben werden kann.

Des Weiteren müssen nicht sämtliche Reibpartikel 6 annähernd die gleiche Größe aufweisen, sondern ist es möglich ein Spektrum bzw. eine oder mehrere Siebfraktionen an unterschiedlichen Durchmessern der Reibpartikel 6 vorzusehen.

Vorzugsweise weisen die Reibpartikel 6 einen nicht länglichen Habitus auf, sind also z.B. annähernd rund bzw. knollenförmig ausgebildet, wie dies in Fig. 2 zu sehen ist. Es kann damit verhindert werden, dass die Reibpartikel 6 in einer bevorzugten Orientierung in die Bindemittelmatrix 5 eingebettet sind.

Vorzugsweise weisen die Reibpartikel 6 ausgeprägte Spitzen und Kanten zur Erhöhung der Reibwirkung auf.

In Fig. 3 ist ein Reibbelages 4 dargestellt, bei dem die Reibpartikel 6 einerseits über die äußere Bindemittelmatrixoberfläche 7 und über die untere, auf den Reibbauteil 1 zugewandte Bindemittelmatrixoberfläche 8 vorragen. Es werden damit die bereits oben erwähnten Eigenschaften des Reibbelages 4 erreicht.

Im Rahmen der Erfindung wurden mit dem Reibbelag 4 Reibbauteile 1 in Form von Synchronringen, Bremslamellen, Bremsbacken, Kupplungsscheiben bzw. Reibbauteile 1 von Reibbaugruppen in Form von Differenzialsperren, trocken- oder nasslaufenden Kupplungen, trocken- oder nasslaufenden Bremsen, Lamellenbremsen, Haltebremsen, Sicherheitsbremsen oder hydrodynamischen Antrieben beschichtet. Die Beschichtung erfolgt dabei auf den Funktionsflächen 3. Als Funktionsfläche 3 wird im Rahmen der Erfindung eine Fläche eines Reibbauteils 1 bezeichnet, welcher mit einem weiteren Reibbauteil in Reibschluss und gegebenenfalls Formschluss verbringbar ist.

Die genannten Reibbauteile bzw. Reibbaugruppen sind aus dem einschlägigen Stand der Technik bestens bekannt sind. Für nähere Einzelheiten hierzu sei daher der Fachmann an diese Literatur verwiesen (z.B.: Fahrzeuggetriebe; G. Lechner, H.Naunheimer; Springer, 1994).

Des Weiteren sei darauf hingewiesen, dass es bei der Darstellung der Erfindung nicht möglich ist, sämtliche Kombinationen an möglichen Bindemitteln und Reibpartikeln 6 sowie gegebenenfalls weitere Zusatzstoffe aufzulisten, da dies den Rahmen dieser Beschreibung sprengen würde. Für den Rahmen, in dem sich die Bewegung bewegt, sei daher auf obige Ausführungen verwiesen.

Unter "nassen" Anwendungen werden im Rahmen der Erfindung Anwendungen des Reibbelages 4 verstanden, bei denen der Reibbelag 4 von einer Flüssigkeit, wie z.B. einem Bremsmittel oder einem Fluid für ein automatisches Getriebe, während des Gebrauches benetzt oder imprägniert wird. Während der Verwendung des "nassen" Reibmaterials wird das Fluid aus dem Reibmaterial herausgequetscht.

Damit der Reibbelag 4 für "nasse" Anwendungsfälle geeignet ist, sollte dieser eine Anzahl an Eigenschaften besitzen. So soll der Reibbelag 4 nachgiebig oder elastisch sein, jedoch widerstandsfähig gegenüber Druckbelastung, Abrasion und Spannung, er sollte eine große Hitzefestigkeit besitzen und in der Lage sein, Wärme rasch abzugeben. Er soll ein lang andauerndes, beständiges und konsistentes Reibungsverhalten besitzen.

Alle diese Eigenschaften werden von dem Reibbelag 4 erfüllt. Um die notwendige Elastizität für nasse Anwendungen des Reibbelages 4 zu erhalten, werden entsprechende synthetische Harze als Bindemittel verwendet, die nach dem Aushärten diese Elastizität aufweisen. Eine Modifizierung der synthetischen Bindemittel ist beispielsweise möglich, in dem die Kettenlänge bzw. die Anzahl und der Art der Seitenketten und funktionellen Gruppe an den Polymerfäden des synthetischen Harzes entsprechend ausgewählt werden. Auch dies wurde bereits des Öfteren in der Literatur beschrieben, beispielsweise in "Ullmann's Encyclopedia of Industrial Chemistry; Urban & Schwarzenberg; München, 5. Auflage, 1997".

Der Träger des Reibbelages 4 ist üblicherweise aus einem metallischen Werkstoff gefertigt. Dieser kann sowohl nach einem Gussverfahren hergestellt, als auch als Sinterbauteil ausgebildet sein. Es sind sowohl Träger aus Reinmetallen, als auch aus Legierungen mehrerer Metalle möglich. Beispielsweise hierfür sind Stahl, Werkstoffe auf Aluminium-, Eisen-, Kupfer, Magnesium-Basis. Beispiele für Sintermetalllegierungen sind aus der DIN V 30 910 Teil 4, Seite 3 zu entnehmen.

### Ausführungsbeispiel 1:

Das Ausführungsbeispiel 1 fällt nicht unter den Wortlaut der Ansprüche.

Es wurde die Funktionsfläche 3 eines Synchronringes aus Stahl beschichtet. Dieses Stahlblech dient als Stützträger.

Auf diese Funktionsfläche 3 wurde ein Reibbelag 4 aufgetragen, bestehend aus 45 Gew.-% Phenolharz als Bindemittelmatrix 5 und 55 Gew.-% Siliziumcarbidpartikel als Reibpartikel 6.

Zur Herstellung des Reibbelages 4 wurde das Phenolharz als Dispersion auf die Funktionsfläche 3 aufgetragen. Als Lösungsmittel bzw. Dispersionsmittel wurde Ethanol in einem Anteil von 25 % bezogen auf das Phenolharz mit Lösungsmittel verwendet.

Es sei an dieser Stelle erwähnt, dass auch andere Lösungs- bzw. Dispersionsmittel verwendet werden können, wie z.B. generell Alkohole, Butanon, Xylol, bzw. generell aromatische Lösungsmittel. Der Anteil des Lösungsmittels kann zwischen 15 % und 40 %, insbesondere zwischen 20 % und 30 %, bezogen auf das Phenolharz mit Lösungsmittel, betragen.

Auf das noch ausgehärtete Phenolharz wurden in der Folge die Siliziumcarbidpartikel aufgestreut. Es wurden Siliziumcarbidpartikel verwendet, von denen 50 % einen Partikeldurchmesser von 40 µm aufwiesen. Das Phenolharz wurde in einer Schichtdicke von 20 µm auftragen.

Nach dem Aufstreuen der Siliziumcarbidpartikel wurde das Phenolharz bei einer Temperatur von 220 ° C ausgehärtet, wodurch die Siliziumcarbidpartikel in die Phenolharzmatrix eingebettet wurden.

Der so hergestellte Reibbelag 4 zeigt sehr gute Reibeigenschaften und eine geringe Geräuschentwicklung.

### Ausführungsbeispiel 2:

In Abwandlung des Ausführungsbeispiels 1 wurde vor dem Verfestigen der Phenolharzmatrix auf den Reibbelag 4 ein Druck ausgeübt, wodurch die Siliziumcarbidpartikel in die Matrix eingedrückt wurden. Es konnte damit eine Verbesserung der Wärmeleitfähigkeit erzielt werden und zudem konnten bessere Delaminationseigenschaften nachgewiesen werden.

Der direkte Kontakt zwischen Träger und Reibpartikel 6 zeigt eine besser Wärmeleitfähigkeit und ein höheres Haftvermögen des Reibbelages 4.

Der Druck auf den Reibbelag wurde über eine Zeitspanne von 15 s bis 30 s nach einer Erwärmung auf 250 ° C aufrechterhalten. Es wurde ein Druck von 15 N/mm² angewandt.

Der Synchronring kann beispielsweise in einer entsprechenden Form über eine Sprühdüse mit dem Phenolharz beschichtet werden und werden die Siliziumcarbidpartikel in die noch offene Form auf das Phenolharz aufgestreut. Nach dem Schließen der Form wird über diese sowohl die erhöhte Temperatur als auch der Druck zur Verfügung gestellt.

### Ausführungsbeispiel 3:

In Abwandlung des Ausführungsbeispieles 1 wurde zur Erhöhung der Haftfestigkeit - im Rahmen der Erfindung nicht zwingend erforderlich - vor dem Auftrag des Phenolharzes ein Haftvermittler auf die Funktionsfläche aufgetragen. Als Haftvermittler wurde ein so genannter Primer auf Phenolharzbasis (verdünntes Phenolharz) verwendet. Selbstverständlich ist es im Rahmen der Erfindung möglich, andere Haftvermittler einzusetzen, wie z.B. Silane.

### Ausführungsbeispiel 4:

In Abwandlung dieses Ausführungsbeispiels 3 wurde ebenfalls zur Erhöhung der Haftung des Reibbelages 4 am Stützkörper dessen Oberfläche sandgestrahlt.

Die Oberfläche kann auch durch Schleifen vorbehandelt werden.

Anstelle der mechanischen Oberflächenbehandlung besteht auch die Möglichkeit eine chemische Oberflächenhandlung vorzunehmen, beispielsweise die Oberfläche zu ätzen, wobei das Ätzmittel sich naturgemäß nach dem verwendeten Werkstoff für das Trägermaterial richtet. Auch Phosphatieren der Oberfläche bzw. Aktivierung der Oberfläche im Plasma sind möglich.

### Ausführungsbeispiel 5:

Es wurde ein Reibbelag 4 auf Phenolharzbasis obiger Zusammensetzung (Ausführungsbeispiel 1) auf eine Kupplungsscheibe aus einem Sinterwerkstoff "Sint D11" (nach DIN 30910-4) hergestellt. Wiederum wurde auf die Siliziumcarbidpartikel Druck ausgeübt, um damit eine mechanische Verkrallung mit dem Sinterwerkstoff zu erhalten.

Dieses Ausführungsbeispiel birgt ein deutlich höheres Haftungsvermögen des Reibbelages 4 auf der Oberfläche des Sinterbauteils.

### Ausführungsbeispiele 6 bis 10:

Die Ausführungsbeispiele 1 bis 5 wurden wiederholt, wobei das Phenolharz durch ein Polyamidimidharz ersetzt wurde. Der Anteil des Polyamidimidharzes am Reibbelag 4 betrug 55 %.

Es konnten zu den Eigenschaften der Reibbeläge nach den Ausführungsbeispielen 1 bis 5 vergleichbare Eigenschaften festgestellt werden.

In folgender Tabelle sind weitere Ausführungsbeispiele des Reibbelages 4 dargestellt.

| Nr. | Bindemittelanteil [%] | | | | | Reibpartikelanteil [%] | | | | | |
|---|---|---|---|---|---|---|---|---|---|---|---|
| | PI | PA I | Acrylharz | Epoxyharz | Phenolharz | SiC | Al₂O₃ | Zn | Diama nt | Stahl | BN |
| 11 | | 30 | | | | | 70 | | | | |
| 12 | | | | 80 | | | 20 | | | | |
| 13 | | | 60 | | | | | 40 | | | |
| 14 | 10 | | | | | 90 | | | | | |
| 15 | 20 | | | | | | 80 | | | | |
| 16 | | | | | 35 | 65 | | | | | |
| 17 | | 40 | | | | 20 | 40 | | | | |
| 18 | | 40 | | | | | 60 | | | | |
| 19 | 30 | 20 | | | | | | | | | 50 |
| 20 | | | 35 | | | | 25 | 40 | | | |
| 21 | | | 10 | | | | | | | 90 | |
| 22 | | | | 40 | | 60 | | | | | |
| 23 | | | | 25 | | 75 | | | | | |
| 24 | | | | | 5 | 40 | | | | | 55 |
| 25 | | 50 | | | | 50 | | | | | |

Für die Herstellung des Reibbelages 4 ist es neben dem bereits erwähnten Aufstreu-Verfahren auch möglich, eine Dispersion aus dem polymerisierbaren, synthetischen Bindemittel und den darin enthaltenen Reibpartikel 6 herzustellen und diese Dispersion direkt auf die Funktionsfläche 3 des entsprechenden Reibbauteils 1 aufzutragen. Nach diesem Verfahren erübrigt sich in der Regel eine Druckanwendung während des Aushärtens der Bindemittelmatrix, da die Reibpartikel 6 bereits sehr tief in die Bindemittelmatrix 5 hineinragen bzw. diese während des Auftragens bereits durchsetzen. Diese Dispersion kann beispielsweise aufgestrichen, aufgewalzt, aufgedruckt oder aufgespritzt werden. Entsprechende Druckverfahren, wie z.B. HVLP Verfahren (high volume low pressure), Siebdruckverfahren, sind bereits aus dem Stand der Technik bekannt. Die verwendeten Harze sind vorzugsweise wärmehärtbar.

Es ist weiters von Vorteil, wenn die verwendeten Reibpartikel 6 einen mittleren Durchmesser aufweisen, der so groß gewählt ist, dass zumindest ein Anteil dieser Reibpartikel 6 um eine Höhe über die Bindemittelmatrix hinausragen, die ausgewählt ist aus einem Bereich mit einer unteren Grenze von 0,5 µm und einer oberen Grenze von 70 µm. Insbesondere weisen diese Partikel einen mittleren Durchmesser auf, der so bemessen ist, dass diese Höhe einen Wert aufweist, der ausgewählt ist aus einem Bereich mit einer unteren Grenze von 3 µm und einer oberen Grenze von 30 µm. Beispielsweise weisen die Partikel einen mittleren Durchmesser auf, der so bemessen ist, dass diese Höhe einen Wert aufweist, der ausgewählt aus einem Bereich mit einer unteren Grenze von 0,5 µm und einer oberen Grenze von 10 µm.

Diese Werte treffen vor allem auf den Überstand der Reibpartikel 6 an der äußeren Oberfläche des Reibbauteils 1, also jener Oberfläche, die mit einem weiteren Reibbauteil in Reibschluss verbringbar ist, zu. An der unteren Oberfläche, also jener Oberfläche des Reibbelages 4, die dem Träger bzw. der Stützschicht zugewandt ist, können diese Reibpartikel 6 einen Überstand gegenüber die Bindemittelmatrix 5 aufweisen, deren Höhe einen Wert annimmt, ausgewählt aus einem Bereich mit einer unteren Grenze von 0,1 µm und einer oberen Grenze von 5 µm, insbesondere ausgewählt aus einem Bereich mit einer unteren Grenze von 0,1 µm und einer oberen Grenze von 2 µm.

Der Reibbelag 4 kann Belagflächendrücke von bis zu ca. 100 bar aushalten, auch wenn dieser Reibbelag 4 unter begrenzten Schmierbedingungen verwendet wird. Mit dem Reibbelag 4 wird auch eine relativ konstante Reibung während des Einrückens oder Ausrückens der Bauteile von beispielsweise Getriebe und Bremssystem erreicht. Es kann damit eine konstante Kraftübertragung erzielt werden.

Das Reibmaterial weist weiters eine gute Scherfestigkeit auf, wodurch der Reibbauteil 1 selbst einer Delamination während des Gebrauches weitestgehend widersteht.

Der Ordnung halber sei abschließend darauf hingewiesen, dass zum besseren Verständnis des Aufbaus des Reibbelages 4 dieser bzw. dessen Bestandteile teilweise unmaßstäblich und/oder vergrößert und/oder verkleinert dargestellt wurden.

### Bezugszeichenaufstellung

- 1: Reibbauteil
- 2: Oberfläche
- 3: Funktionsfläche
- 4: Reibbelag
- 5: Bindemittelmatrix
- 6: Reibpartikel
- 7: Bindemittelmatrixoberfläche

## Patentansprüche

1. Reibbauteil (1) in Form eines Synchronisationsringes, einer Bremslamelle, einer Bremsbacke oder einer Kupplungsscheibe, mit einem metallischen Bauteilkörper, der eine Funktionsfläche (3) zur Ausbildung eines Reibschlusses mit einem weiteren Reibbauteil aufweist, wobei die Funktionsfläche (3) zumindest teilweise mit einem Reibbelag (4) versehen ist, der eine Bindemittelmatrix (5) aus einem synthetischen Harz und Reibpartikel (6) umfasst, wobei die Bindemittelmatrix (5) eine Schicht, die eine erste und eine dieser gegenüberliegende zweiten Oberflächen aufweist, mit einer vorbestimmbaren Schichtdicke ausgewählt aus einem Bereich mit einer unteren Grenze von 1 µm und einer oberen Grenze von 150 µm ausbildet, und ein Anteil der Reibpartikel (6), der ausgewählt ist aus einem Bereich mit einer unteren Grenze von 20 % und einer oberen Grenze von 100 %, bezogen auf den Gesamtanteil der Reibpartikel (6), einen Durchmesser aufweist, der größer ist als die Schichtdicke der Bindemittelmatrix (5), **dadurch gekennzeichnet, dass** die Reibpartikel (6) über der erste und über die zweite Oberfläche vorragen.

2. Reibbauteil (1) nach Anspruch 1, **dadurch gekennzeichnet, dass** die Reibpartikel (6) eine mittlere Größe aufweisen, die ausgewählt ist aus einem Bereich mit einer unteren Grenze von 2 µm und einer oberen Grenze 200 µm.

3. Reibbauteil (1) nach Anspruch 1 oder 2, **dadurch gekennzeichnet, dass** der Anteil der Bindemittelmatrix (5) am Reibbelag (4) ausgewählt ist aus einem Bereich mit einer unteren Grenze von 5 Gew.-% und einer oberen Grenze von 80 Gew.-%.

4. Reibbauteil (1) nach einem der Ansprüche 1 bis 3, **dadurch gekennzeichnet, dass** sich ein Anteil der Reibpartikel (6) durch die gesamte Schichtdicke der Bindemittelmatrix (5) erstrecken.

5. Reibbauteil (1) nach einem der Ansprüche 1 bis 4, **dadurch gekennzeichnet, dass** die Flächenbelegung der Reibpartikel (6) an einer äußeren Oberfläche des Reibbelages (4) ausgewählt ist aus einem Bereich mit einer unteren Grenze von 3 Flächen-% und einer oberen Grenze von 45 Flächen-%.

6. Reibbauteil (1) nach einem der vorhergehenden Ansprüche, **dadurch gekennzeichnet, dass** der Reibbelag (4) weiters noch zumindest einen weiteren Zusatzstoff enthält in einem Anteil, der ausgewählt ist aus einem Bereich mit einer unteren Grenze von 0,5 Gew.-% und einer oberen Grenze von 10 Gew.-%.

7. Reibbauteil (1) nach Anspruch 6, **dadurch gekennzeichnet, dass** mehrere Zusatzstoffe in einem Summenanteil im Reibbelag (4) enthalten sind, der maximal 25 Gew.-% beträgt.

8. Reibbauteil (1) nach einem der vorhergehenden Ansprüche, **dadurch gekennzeichnet, dass** dieser faserfrei ist.

9. Reibbauteil (1) nach einem der vorhergehenden Ansprüche, **dadurch gekennzeichnet, dass** die Reibpartikel (6) einen kugel- oder knollenförmig bzw. annähernd kubischen Habitus mit polygonalem Querschnitt aufweisen.

10. Reibbauteil (1) nach einem der vorhergehenden Ansprüche, **dadurch gekennzeichnet, dass** die Bindemittelmatrix (5) durch ein, gegebenenfalls modifiziertes, Phenolharz, und die Reibpartikel (6) durch Siliciumcarbid gebildet sind.

11. Reibbaugruppe umfassend zumindest einen ersten und einen damit in Reibschluss verbringbaren zweiten Reibbauteil, wobei sowohl der erste als auch der zweite Reibbauteil jeweils zumindest eine Funktionsfläche (3) zur Ausbildung des Reibschlusses aufweisen, wobei zumindest eine der Funktionsflächen (3) zumindest teilweise mit einem Reibbelag (4) versehen ist, **dadurch gekennzeichnet, dass** zumindest ein Reibbauteil (1) nach einem der Ansprüche 1 bis 10 ausgebildet ist.

12. Reibbaugruppe nach Anspruch 11, **dadurch gekennzeichnet, dass** diese als Differentialsperre, trocken- oder nasslaufende Kupplung, trocken- oder nasslaufende Bremse, Lamellenbremse, Haltebremse, Sicherheitsbremse oder als hydrostatischer Antrieb ausgebildet ist.

13. Verwendung der Reibbaugruppe nach einem der Ansprüche 11 oder 12 in Anwendungen mit dynamischer Reibung.

## Claims

1. A friction component (1) in the form of a synchronization ring, a brake disc, a brake shoe or a clutch disc, with a metallic component body, which exhibits a functional surface (3) to establish a frictional engagement with another friction component, wherein the functional surface (3) is at least partially provided with a friction lining (4), which encompasses a binder matrix (5) comprised of a synthetic resin and friction particles (6), wherein the binder matrix (5) forms a layer exhibiting a first and an opposing second surface, with a predeterminable layer thickness selected from a range with a lower limit of 1 µm and an upper limit of 150 µm, and a percentage of the friction particles (6) selected from a range with a lower limit of 20 % and an upper limit of 100 % relative to the total percentage of friction particles (6) exhibits a diameter greater than the layer thickness of the binder matrix (5), **characterized in that** the friction particles (6) protrude over the first and second surface.

2. The friction component (1) according to claim 1, **characterized in that** the friction particles (6) exhibit an average size selected from a range with a lower limit of 2 µm and an upper limit of 200 µm.

3. The friction component (1) according to claim 1 or 2, **characterized in that** the percentage of binder matrix (5) in the friction lining (4) is selected from a range with a lower limit of 5 %w/w and an upper limit of 80 %w/w.

4. The friction component (1) according to one of claims 1 to 3, **characterized in that** a percentage of the friction particles (6) extends through the entire layer thickness of the binder matrix (5).

5. The friction component (1) according to one of claims 1 to 4, **characterized in that** the area allocation of friction particles (6) on the outer surface of the friction lining (4) is selected from a range with a lower limit of 3 % by area and an upper limit of 45 % by area.

6. The friction component (1) according to one of the preceding claims, **characterized in that** the friction lining (4) also contains at least one other additive in a percentage selected from a range with a lower limit of 0.5 %w/w and an upper limit of 10 %w/w.

7. The friction component (1) according to claim 6, **characterized in that** several additives are contained in the friction lining (4) in an overall percentage that measures at most 25 %w/w.

8. The friction component (1) according to one of the preceding claims, **characterized in that** the latter is free of fibers.

9. The friction component (1) according to one of the preceding claims, **characterized in that** the friction particles (6) exhibit a spherical or bulbous or roughly cubic habitus with a polygonal cross section.

10. The friction component (1) according to one of the preceding claims, **characterized in that** the binder matrix (5) is formed by a potentially modified phenol resin, and the friction particles (6) by silicon carbide.

11. A friction assembly encompassing at least a first friction component and a second one frictionally engaged therewith, wherein both the first and second friction component each exhibit a functional surface (3) to establish the frictional engagement, wherein at least one of the functional surfaces (3) is at least partially provided with a friction lining (4), **characterized in that** at least one friction component (1) is formed according to one of claims 1 to 10.

12. The friction assembly according to claim 11, **characterized in that** the latter is designed as a differential lock, a dry or wet running clutch, a dry or wet running brake, a multi-disc brake, a holding brake, an emergency brake or as a hydrostatic drive.

13. Use of the friction assembly according to one of claims 11 or 12 in applications involving dynamic friction.

## Revendications

1. Composant de friction (1) sous la forme d'un anneau de synchronisation, d'un disque de frein, d'un segment de frein ou d'un disque d'embrayage, comprenant un corps de composant métallique, qui présente une surface fonctionnelle (3) pour former une liaison par friction avec un composant de friction supplémentaire, dans lequel la surface fonctionnelle (3) est prévue au moins partiellement avec une garniture de friction (4), comprenant une matrice de liant (5) constituée d'une résine synthétique et de particules de friction (6), dans lequel la matrice de liant (5) forme une couche qui présente une première surface et une seconde surface opposée à celle-ci, ayant une épaisseur de couche prédéterminée choisie dans une plage avec une limite inférieure de 1 µm et une limite supérieure de 150 µm, et une proportion des particules de friction (6) qui est choisie dans une plage avec une limite inférieure de 20 % et une limite supérieure de 100 %, sur la base de la quantité totale des particules de friction (6), présente un diamètre qui est supérieur à l'épaisseur de couche de la matrice de liant (5), **caractérisé en ce que** les particules de friction (6) font saillie au-dessus de la première et de la seconde surface.

2. Composant de friction (1) selon la revendication 1, **caractérisé en ce que** les particules de friction (6) ont une taille moyenne qui est choisie dans une plage avec une limite inférieure de 2 µm et une limite supérieure de 200 µm.

3. Composant de friction (1) selon la revendication 1 ou 2, **caractérisé en ce que** la proportion de la matrice de liant (5) dans la garniture de friction (4) est choisie dans une plage avec une limite inférieure de 5 % en poids et une limite supérieure de 80 % en poids.

4. Composant de friction (1) selon l'une quelconque des revendications 1 à 3, **caractérisé en ce qu'**une proportion des particules de friction (6) s'étend à travers toute l'épaisseur de couche de la matrice de liant (5).

5. Composant de friction (1) selon l'une quelconque des revendications 1 à 4, **caractérisé en ce que** le recouvrement de surface des particules de friction (6) sur une surface extérieure de la garniture de friction (4) est sélectionné dans une plage avec une limite inférieure de 3 % en surface et une limite supérieure de 45 % en surface.

6. Composant de friction (1) selon l'une quelconque des revendications précédentes, **caractérisé en ce que** la garniture de friction (4) comprend en outre au moins un autre additif dans une proportion sélectionnée dans une plage avec une limite inférieure de 0,5 % en poids et une limite supérieure de 10 % en poids.

7. Composant de friction (1) selon la revendication 6, **caractérisé en ce que** plusieurs additifs sont inclus dans la garniture de friction (4), en une proportion totale qui s'élève à un maximum de 25 % en poids.

8. Composant de friction (1) selon l'une quelconques des revendications précédentes, **caractérisé en ce qu'**il est exempt de fibres.

9. Composant de friction (1) selon l'une quelconque des revendications précédentes, **caractérisé en ce que** les particules de friction (6) ont une apparence sphérique ou en forme de bulbe, ou plutôt approximativement cubique avec une section transversale polygonale.

10. Composant de friction (1) selon l'une quelconque des revendications précédentes, **caractérisé en ce que** la matrice de liant (5) est constituée d'une résine phénolique éventuellement modifiée, et les particules de friction (6) sont constituées de carbure de silicium.

11. Ensemble de friction comprenant au moins un premier composant de friction et un second composant de friction relié à celui-ci par l'intermédiaire d'une liaison par friction, dans lequel aussi bien le premier que le second composant de friction comportent chacun au moins une surface fonctionnelle (3) pour former une liaison par friction, dans lequel au moins l'une des surfaces fonctionnelles (3) est prévue au moins partiellement avec une garniture de friction (4), **caractérisé en ce qu'**au moins un composant de friction (1) est réalisé selon l'une quelconque des revendications 1 à 10.

12. Ensemble de friction selon la revendication 11, **caractérisé en ce que** celui-ci est réalisé sous la forme d'un embrayage différentiel fonctionnant à l'état sec ou humide, de freins fonctionnant à l'état sec ou humide, de freins à disques, de freins de stationnement, de freins de sécurité ou sous la forme d'un entraînement hydrostatique.

13. Utilisation de l'ensemble de friction selon la revendication 11 ou 12, dans des applications avec une friction dynamique.
